# EUROPÄISCHE PATENTSCHRIFT

(11) **EP 0 670 619 B1**
(45) Veröffentlichungstag und Bekanntmachung des Hinweises auf die Patenterteilung: **01.08.2001**
(21) Anmeldenummer: 95107663.7
(22) Anmeldetag: 26.05.1992
(51) Int. Cl.: F16L 3/015, H02G 11/00

(54) **Schleppkettenersatz**
Supporting chain replacement
Remplacement pour chaîne de guidage pour câbles

(30) Priorität: 26.11.1991 EP 91120167
(43) Veröffentlichungstag der Anmeldung: 06.09.1995
(62) Teilanmeldung aus: 92108881.1
(73) Patentinhaber: Kabelschlepp Gesellschaft mit beschränkter Haftung, 57074 Siegen (DE)
(72) Erfinder: Trieb, Karl-Heinz, D-91710 Gunzenhausen (DE); Meier, Karl, D-91180 Heideck (DE)
(74) Vertreter: Kahlhöfer, Hermann, Dipl.-Phys.

(56) Entgegenhaltungen:
- DE-U- 9 016 870
- GB-A- 2 014 268
- US-A- 3 473 769
- US-A- 3 630 325

## Beschreibung

Die Erfindung betrifft einen Schleppkettenersatz für eine Leitungsanordnung, deren Enden mit einer feststehenden Einrichtung bzw. mit einer relativ dazu beweglichen Einrichtung verbunden sind und die zwischen deren Enden flexibel ist.

Mit einem derartigen Schleppkettenersatz kann beispielsweise eine hin- und herbewegbare Einrichtung mit einer feststehenden Einrichtung verbunden werden.

Herkömmlicherweise verwendet man hierzu Schleppketten oder Schleppkettenanordnungen, die zwei oder mehrere Kettenbänder aus Metall oder Kunststoff aufweisen, in denen einzelne Leitungen geführt sind. Sind die feststehende Einrichtung und die hin- und herbewegliche Einrichtung übereinander angeordnet und überschreitet die Schleppketten im Hinblick auf den erforderlichen Bewegungsweg der beweglichen Einrichtung eine bestimmte Länge, legt sich das Obertrum der Schleppkette auf deren Untertrum ab. Dies führt entweder zu einer starken mechanischen Belastung der Schleppkette oder muß durch eine Zwischendecke in Form eines Gleitbleches in einem Führungskanal für die Schleppkette verhindert werden, wobei das obere Trum der Schleppkette auf dem Gleitblech abgelegt wird. Hinzu kommt, daß eine derartige Schleppkette aufgrund eines hohen Herstellungs- und Montageaufwandes teuer ist, erhebliche Bewegungsgeräusche verursachen kann und aufgrund des Spiels der Kettenglieder relativ zueinander eine Längsdehnung ermöglicht, die häufig unerwünscht ist.

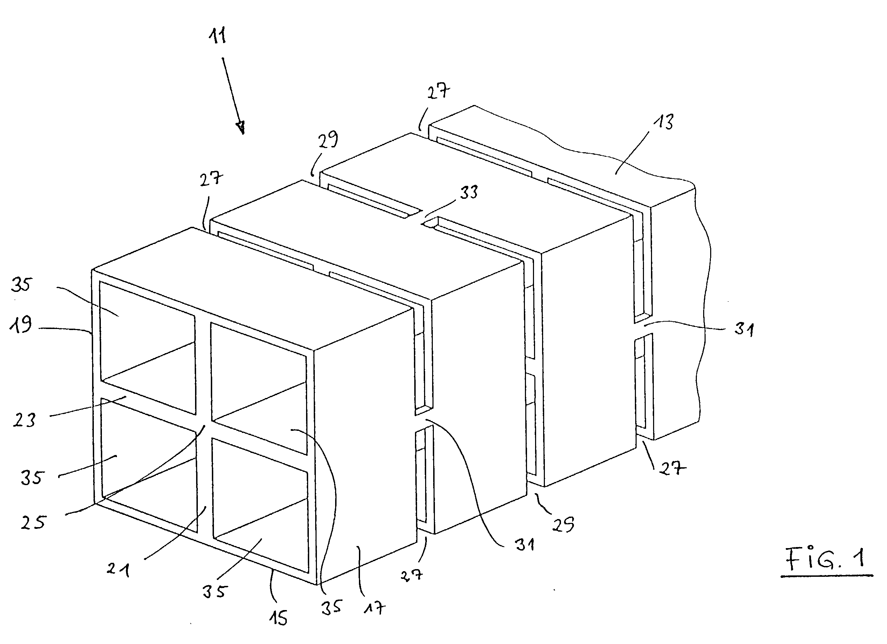

In der EP-A- 0490022 ist ein Schleppkettenersatz beschrieben, mit dem die Probleme herkömmlicher Schleppkettenanordnungen überwunden werden. Hierzu wird die zu führende Leitung oder Leitungsanordnung mindestens auf derjenigen Seite, auf welcher die beiden Trums der Leitung oder Leitungsanordnung zueinander weisen, mit einer in Leitungslängsrichtung wirksamen Gleiteinrichtung versehen, welche eine Reibung zwischen den beiden Trums auch bei der Aneinanderliegen verhindert. Eine der Lösungsmöglichkeiten, die in der EP -A- 0490022 angegeben sind, besteht in einem Leitungsaufnahmekanal, in dem eine oder mehrere zu führende Leitungen angeordnet sind und der aus Material guter Gleitfähigkeit besteht. Einige der in der EP -A- 0490022 gezeigten Ausführungsformen für einen derartigen Schleppkettenersatz sind in den beiliegenden Fig. 3, 5 und 6 gezeigt.

Eine Weiterbildung eines derartigen Schleppkettenersatzes in Form eines Leitungsaufnahmekanals ist in der EP-A-0544027 beschrieben. Diese Weiterbildung besteht darin, eine Wand des Leitungsaufnahmekanals mit einem sich über dessen gesamte Länge erstreckenden Eindrückschlitz zu versehen, durch welchen die Leitung oder Leitungen, die von dem Leitungsaufnahmekanal aufgenommen werden sollen, von außen in den Leitungskanal hineingedrückt werden können. Eine Ausführungsform dieser Weiterbildung ist in der beiliegenden Fig. 4 gezeigt.

Die in den beiliegenden Fig. 3, 4 und 6 gezeigten Ausführungsformen eines Schleppkettenersatzes sind mit in Längsrichtung voneinander beabstandeten Querschlitzen versehen, die eine schleifenartige Biegung des Schleppkettenersatzes ermöglichen. Der maximale Biegeradius wird wesentlich durch die räumliche Frequenz, d.h., den Abstand der einzelnen Querschlitze voneinander, bestimmt.

Die in den beiliegenden Fig. 3, 4 und 6 gezeigten Ausführungsformen eines Schleppkettenersatzes eignen sich zur Verbindung einer feststehenden und einer beweglichen Einrichtung dann recht gut, wenn sich die bewegliche Einrichtung linear hin- und herbewegt derart, daß die beidseits des Schleifenteils befindlichen Trums immer genau parallel übereinander oder nebeneinander verlaufen und nur in eine Richtung gebogen werden.

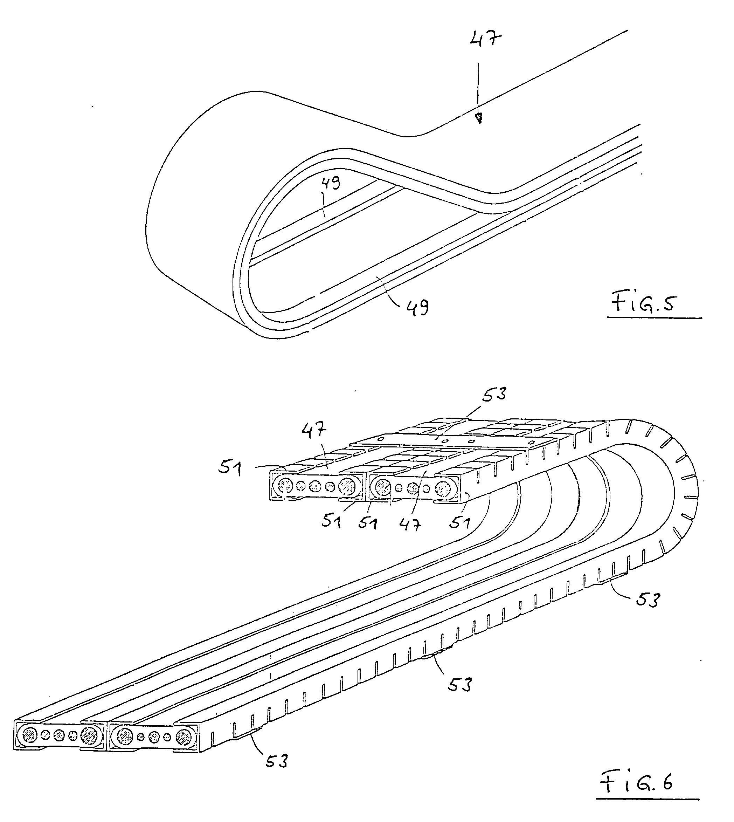

Ist eine Biegung auch in der entgegengesetzten Richtung erforderlich, als sie in beiliegender Fig. 6 gezeigt ist, kann man zwischen den gezeigten Querschlitzen entgegengesetzt gerichtete Querschlitze anordnen. Bei dem in Fig. 3 gezeigten Leitungsaufnahmekanal für ein oder mehrere lose eingelegte Leitungen würden zwischen den von der oberen Kanalwand her eindringenden Querschlitzen zusätzlich von der unteren Kanalwand her eindringende Querschlitze angeordnet, die sich je bis in die Nähe der Oberwand erstrecken. Ein derartiger Schleppkettenersatz würde eine S-förmige Biegeschleife ermöglichen. Allerdings würde ein derartiger Schleppkettenersatz ein Auseinanderziehen in Längsrichtung ermöglichen, ähnlich einer Girlande. Dies kann problematisch sein, da dann die Zugentlastungsfunktion des Leitungsaufnahmekanals für die eingelegten Leitungen verloren gehen kann und Zugspannungen zwischen feststehender Einrichtung und beweglicher Einrichtung auf die mit dem Schleppkettenersatz geführten Leitungen wirken können.

Weder herkömmliche Schleppketten noch die bisher erläuterten Schleppkettenersatz-Ausführungsformen ermöglichen eine dreidimensionale Beweglichkeit zwischen festehender Einrichtung und beweglicher Einrichtung. Diese ist beispielsweise erforderlich, wenn man einen Roboterarm mit einer feststehenden Einrichtung, beispielsweise am Fuß des Roboters, verbinden möchte und zwischen dem Roboterarm und der feststehenden Einrichtung mehrere in verschiedenen Richtungen bewegliche Gelenke angeordnet sind.

Durch die GB 2 014 268 ist ein Schleppkettensatz für eine Leitungsanordnung bekannt. Die Enden des Schleppkettensatzes sind mit einer feststehenden Einrichtung bzw. mit einer beweglichen Einrichtung verbunden. Zwischen den Enden befindet sich ein flexibler Abschnitt. Der Schleppkettensatz weist eine Leitungsaufnahmeeinrichtung zum Einfassen mindestens einer ein- oder mehradrigen Leitung auf. Berchrieben wird jetz ein Schleppkettenersatz verfügbar gemacht, der dreidimensionale Bewegungen einer beweglichen Einrichtung gegenüber einer feststehenden Einrichtung zuläßt.

Zu diesem Zweck gibt es einen Schleppkettenersatz mit einem Leitungsaufnahmekanal vor, dessen Außenumfangswand mit einer Vielzahl in Kanallängsrichtung im Abstand voneinander angeordneter, quer zur Kanallängsrichtung verlaufender Umfangsschlitze versehen ist, die je um den gesamten Umfang des Leitungsaufnahmekanals umlaufend nur von einem gelenkig wirkenden Steg oder nur von zwei sich im Winkelabstand von 180° diametral gegenüberliegenden gelenkig wirkenden Stegen unterbrochen ist bzw. sind. Dabei sind die Stege benachbarter Umfangsschlitze um einen Umfangswinkel von 90° zueinander versetzt. Die Breite der Umfangsschlitze und deren Abstände voneinander sind entsprechend dem gewünschten maximalen Biegeradius des Leitungsaufnahmekanals dimensioniert. Die Stegbreite in Umfangsrichtung des Leitungsaufnahmekanals gesehen beträgt nur einen Bruchteil der Abmessung der zugehörigen Kanalwand in dieser Umfangsrichtung.

Bei einem Schleppkettenersatz, der im Betrieb schleifenartige Biegebereiche bildet und bei dem sich die beidseits des Schleifenbereichs befindlichen Trums gleitend aneinander vorbeibewegen können, sollte die Breite der Umfangsschlitze nicht zu groß gemacht wer-den, um ein Verhaken der aneinander gleitenden Trums zu verhindern. In diesem Fall sollte ein erwünschter maximaler Biegeradius durch eine größere Anzahl dichter beabstandeter Umfangsschlitze ermöglicht werden.

Man kann den maximalen Biegeradius entlang dem Leitungsaufnahmekanal dadurch variieren, daß man den Abstand aufeinander folgender Umfangsschlitze in verschiedenen Kanalabschnitten unterschiedlich macht.

Bei gleicher Anzahl Umfangsschlitze pro Längeneinheit des Leitungsaufnahmekanals erreicht man einen besonders hohen maximalen Biegeradius dadurch, daß man jeden Umfangsschlitz mit Ausnahme eines einzigen gelenkig wirkenden Steges um den gesamten Umfang des Leitungskanals umlaufen läßt. Hierbei kann es allerdings zu einer gewissen Längsdehnung entsprechend dem Girlandeneffekt kommen. Diese Ausführungsform ist daher nicht geeignet, wenn derartige Längsdehnungen des Leitungsaufnahmekanals vermieden werden sollen. In diesem Fall empfiehlt sich eine Ausführungsform, bei welcher jeder Umfangsschlitz durch zwei sich im Winkelabstand von 180° diametral gegenüberliegende gelenkig wirkende Stege unterbrochen ist.

Je dünner in Umfangsschlitzrichtung gesehen man die Stege macht, desto größer ist bei einem Leitungsaufnahmekanal vorgegebener Umfangswandstärke und vorgegebener Materialflexibilität die Verbiegbarkeit des Schleppkettenersatzes und umso weniger Verbiegekraft muß aufgewendet werden. Dem sind aber Grenzen gesetzt durch die Längsrichtungzugkraft, die der Schleppkettenersatz aushalten soll. Macht man die Stege zu dünn, können sie reißen. Ihre Dicke, in Umfangsschlitzrichtung gesehen, liegt daher vorzugsweise im Bereich von etwa 0,5 bis 10%, besonders bevorzugt bei etwa 2% der Umfangslänge des Leitungsaufnahmekanals.

Die Längsrichtungsstabilität des Leitungsaufnahmekanals und damit des Schleppkettenersatzes kann zusätzlich erhöht werden durch zwei kreuzweise im Leitungsaufnahmekanal angeordnete Trennwände, die sich je von gegenüberliegenden Stellen des Kanalumfangs erstrecken und in Längsrichtung des Leitungsaufnahmekanals durch diesen hindurch verlaufen. Deren Kreuzungsschnittlinie liegt vorzugsweise in der neutralen Biegezone des Leitungsaufnahmekanals, bei Leitungsaufnahmekanälen mit symmetrischen Querschnitt demnach in der Mittellängsachse des Leitungsaufnahmekanals.

Der Leitungsaufnahmekanal weist vorzugsweise einen rechteckigen, kreisrunden, ovalen oder elliptischen Querschnitt auf.

Die Umfangsschlitze setzen sich dabei vom Kanalumfang aus von den Außenenden einer der beiden Trennwände bis zu den je gegenüberliegenden Oberflächen der anderen Trennwand fort, wobei sich die Trennwände, in welche sich die Umfangsschlitze hineinerstrecken, bezüglich in Kanallängsrichtung aufeinanderfolgender Umfangsschlitze abwechseln. Dadurch bleibt das Kreuzzentrum der beiden Trennwände über die gesamte Kanallänge ohne Unterbrechung und kann eine Längsdehnung des Leitungsaufnahmekanals verhindern.

Häufig fällt die Ruhestellung des Schleppkettenersatzes, die sie dann einnimmt, wenn sich die bewegliche Einrichtung in ihrer Ruhestellung befindet, nicht mit einem linear gestreckten Zustand des Leitungsaufnahmekanals überein. Betrachtet man beispielsweise einen Schleppkettenersatz, der eine dreidimensionale Bewegung eines Roboterarms gegenüber einer feststehenden Einrichtung mitmachen muß, kann die Ruhestellung des Leitungsaufnahmekanals irgendeine beliebige dreidimensionale Kurve sein.

Der erfinderischer Aspekt besteht darin, den Schleppkettenersatz aus oder mit Material aufzubauen, das einen sogenannten Memory-Effekt aufweist. Material mit Memory-Effekt kann man durch eine bestimmte Behandlung, beispielsweise Wärmebehandlung, in eine gewünschte Vorzugsform bringen, so daß eine mit diesem Material aufgebaute Vorrichtung im sich selbst überlassenen Zustand, in dem sie von keinen äußeren Kräften beeinflußt wird, die gewünschte Vorzugsstellung und Vorzugsform einnimmt. Memory-Material, dem man einen derartigen Memory-Effekt vermitteln kann, ist beispielsweise Polyamid (PA). Stellt man einen erfindungsgemäßen, dreidimensional beweglichen Schleppkettenersatz beispielsweise aus Polyamid als Memory-Material her, bringt man den Memory-Effekt dadurch ein, daß man den Leitungsaufnahmekanal in die gewünschte Ruheform bringt und ihn in dieser Ruheform über eine durch das Material vorbestimmte Temperaturschwelle hinaus erhitzt. Nach dem Abkühlen behält der Leitungsaufnahmekanal dann diese vorgegebene Ruheform.

Durch diese Speicherung einer durch die Ruhestellung beispielsweise eines dreidimensional beweglichen Roboterarms vorgegebenen Ruheform des Leitungsaufnahmekanals erreicht man, daß für Auslenkungen des Leitungsaufnahmekanals oder Schleppkettenersatzes aus dieser Ruhestellung heraus in alle Richtungen ein etwa gleich großer Kraftaufwand von den die Roboterbewegung bewirkenden Motoren aufzubringen ist. Würde man dagegen für den Schleppkettenersatz einen Leitungsaufnahmekanal ohne Memory-Behandlung verwenden, dessen Ruheform die linear langgestreckte Form ist, müßte man nicht nur zur Rückbewegung der beweglichen Einrichtung in deren Ruhestellung eine Kraft zur Verbiegung des Leitungsaufnahmekanals dorthin aufwenden. Verbiegungen des Leitungsaufnahmekanals oder Schleppkettenersatzes von der linear gestreckten Stellung aus über die Ruhestellung der beweglichen Einrichtung hinaus in extreme Auslenkungen könnten dann einen erheblich höheren Kraftaufwand erfordern als bei einem Leitungsaufnahmekanal oder Schleppkettenersatz, der durch Memory-Behandlung in eine der Ruhestellung der beweglichen Einrichtung entsprechende Ruheform vorgeformt ist.

Der erfinderische Aspekt, für den Schleppkettenersatz Material mit Memory-Effekt zu verwenden und den Schleppkettenersatz durch Memory-Behandlung in eine bestimmte Ruhestellungsform zu bringen, hat Bedeutung nicht nur für den hier offenbarten dreidimensionalen Schleppkettenersatz sondern auch für alle anderen Schleppkettenersatzformen, beispielsweise die in der EP -A- 0490022 und in der EP -A-0544027 gezeigten Schleppkettenersatz-Ausführungsformen. Der Memory-Effekt kann beispielsweise für die in den beiliegenden Fig. 3 bis 6 gezeigten Schleppkettenersatz-Ausführungsformen vorteilhaft sein. Es wird daher ausdrücklich darauf hingewiesen, daß der Erfindungsaspekt des Memory-Effektes unabhängig von dem Erfindungsgedanken eines dreidimensionalen Schleppkettenersatzes selbständige Erfindungsqualität und Erfindungsbedeutung hat.

Die Erfindung schafft auch einen Schleppkettenersatz mit dreidimensionaler Verbiegbarkeit, zu welchem Zweck ein Leitungsaufnahmekanal vorgesehen ist, der in Leitungslängsrichtung voneinander beabstandete Umfangsschlitze aufweist, die je bis auf einen Rest in Form eines oder sich diametral gegenüberliegender zweier Stege umlaufen. Die Stege benachbarter Umfangsschlitze haben einen Winkelabstand von 90° voneinander. Der Leitungsaufnahmekanal kann mit einem Memory-Material aufgebaut sein, das durch eine Memory-Behandlung in eine Vorzugsform gebracht ist.

Weitergehende Ausführungsformen sind den Patentansprüchen entnehmbar.

Anhand der beiliegenden Zeichnungen werden nun erfindungsgemäße Ausführungsformen näher erläuert. In den Zeichnungen zeigen:
- Fig. 1: eine erste Ausführungsform eines dreidimensionalen, kanalförmigen Schleppkettenersatzes;
- Fig. 2: eine zweite Ausführungsform eines dreidimensionalen, kanalförmigen Schleppkettenersatzes;
- Fig. 3: eine Ausführungsform eines nur in einer Richtung verbiegbaren kanalförmigen Schleppkettenersatzes;
- Fig. 4: eine Modifizierung der in Fig. 3 gezeigten Ausführungsform;
- Fig. 5: eine Ausführungsform eines Schleppkettenersatzes mit Gleitbändern; und
- Fig. 6: eine Ausführungsform eines Schleppkettenersatzes mit Gleitrinnen.

Fig. 1 zeigt einen Leitungsaufnahmekanal 11 für einen dreidimensional beweglichen Schleppkettenersatz. Der Leitungsaufnahmekanal 11 weist einen rechteckigen Querschnitt auf und besitzt eine Oberwand 13, eine Unterwand 15, eine rechte Seitenwand 17 und eine linke Seitenwand 19. Eine vertikale Trennwand 21 erstreckt sich in der Mitte zwischen den Seitenwänden 17 und 19 von der Oberwand 13 zur Unterwand 15. Eine horizontale Trennwand 23 erstreckt sich in der Mitte zwischen Oberwand 13 und Unterwand 15 von der rechten Trennwand 17 zur linken Trennwand 19.

Begriffe wie links, rechts, vertikal, horizontal, oben und unten werden zur einfacheren Ausdrucksweise unter Zugrundelegung der Darstellung in Fig. 1 verwendet. Selbstverständlich gelten sie nicht absolut, da ein Schleppkettenersatz, wie er in der Fig. 1 und den weiteren Figuren gezeigt ist, beim praktischen Einsatz beliebig andere Lagen als die in den Figuren gezeigten einnehmen kann.

Der gesamte Leitungsaufnahmekanal 11 ist vorzugsweise einstückig extrudiert. Dies umfaßt das durch die Trennwände 21 und 23 gebildete Kreuz im Innenraum des Leitungsaufnahmekanals 11. Die Kreuzungsstelle 25 verläuft in der Kanallängsachse und damit in der neutralen Biegezone des Leitungsaufnahmekanals 11.

Der Leitungsaufnahmekanal 11 ist mit einer Vielzahl in Kanallängssrichtung im Abstand voneinander angeordneter, quer zur Kanallängsrichtung verlaufender Umfangsschlitze 27 und 29 versehen, die je um den gesamten Umfang des Leitungsaufnahmekanals 11 umlaufend nur von zwei sich im Winkelabstand von 180° diametral gegenüberliegenden, gelenkig wirkenden Stegen 31 bzw. 33 unterbrochen sind. Die Stege 31, 33 befinden sich je in der Mitte einer der Seitenwände 17, 19 oder in der Mitte der Oberwand 13 bzw. der Unterwand 15. Die Stege in der Unterwand 15 und in der linken Seitenwand 19 sind in Fig. 1 nicht zu sehen.

Bei der dargestellten Ausführungsform sind die Stege 31 und 33 durch Wandbereiche gebildet, die zwischen den Umfangsschlitzen 27 bzw. 29 stehengeblieben sind. Die elastische und nicht-elastische Verbiegbarkeit der Stege 31, 33 ist daher durch das für den Leitungsaufnahmekanal 11 verwendete Material bestimmt.

Ein wesentlichen Gesichtspunkt der vorliegenden Erfindung ist nun, daß die Stege 31 und 33 benachbarter Umfangsschlitze 27 bzw. 29 um einen Umfangswinkel von 90° zueinander versetzt sind. Das kann man anders auch so ausdrücken, daß die oberen und die unteren Bereiche der Umfangsschlitze 27 sich von der Oberwand 13 bzw. der Unterwand 15 aus in die Seitenwände 17 und 19 hineinerstrecken, wohingegen sich die linken und die rechten Bereiche der Umfangsschlitze 29 von der linken Seitenwand 19 bzw. der rechten Seitenwand 17 aus in die Oberwand 13 bzw. die Unterwand 15 hineinerstrecken, je bis zu den zugehörigen Stegen 31 bzw. 33. Dabei erstrecken sich die Umfangsschlitze 27 von den Umfangsenden der vertikalen Trennwände 21 bis zu der je gegenüberliegenden Oberfläche der horizontalen Trennwand 23, während sich die Umfangsschlitze 29 von den Umfangsenden der horizontalen Trennwand 23 bis zu den je gegenüberliegenden Oberflächen der vertikalen Trennwand 21 erstrecken. Die Kreuzungsstelle 25 zwischen vertikaler Trennwand 21 und horizontaler Trennwand 23 bleibt daher über die gesamte Länge des Leitungsaufnahmekanals ohne Unterbrechung.

Da für einen derartigen Leitungsaufnahmekanal 11 ein Kunststoffmaterial mit gewisser elastischer Verbiegbarkeit verwendet wird, können die Stege 31 und 33 eine gewisse Gelenkfunktion ausüben. Für Biegebewegungen des Leitungsaufnahmekanals 11 in Richtung der vertikalen Trennwand 21 nach oben oder unten dienen die Stege 31 als Gelenke. Für Biegebewegungen des Leitungsaufnahmekanals 11 in Richtung der horizontalen Trennwand 23 nach links oder nach rechts dienen die Stege 33 als Gelenke. Durch das Zusammenwirken der durch die Stege 31 und durch die Stege 33 gebildeten Gelenke wird somit insgesamt eine dreidimensionale Bewegung ermöglicht. Der maximale Biegeradius ist dabei durch das Zusammenwirken von Umfangsschlitzbreite und räumlicher Frequenz, d.h., Anzahl der Umfangsschlitze 27, 29 pro Längeneinheit des Leitungsaufnahmekanals 11, gegeben.

Da jeder Umfangsschlitz durch zwei gegenüberliegende Stege 31 bzw. 33 unterbrochen ist und sich die Umfangsschlitze 27, 29 nicht durch die Kreuzungsstelle 25 hindurch erstrecken, ist absolute Längsstabilität des Leitungsaufnahmekanals 11 gegen Längsausdehnungen gegeben.

Diese Längsstabilität bleibt auch erhalten, wenn man auf dem Außenumfang des Leitungsaufnahmekanals 11 pro Umfangsschlitz 27, 29 nur einen Steg 31 bzw. 33 vorsieht und der jeweilige Umfangsschlitz 27 bzw. 29 die nicht an den Steg 31 bzw. 33 angrenzende Trennwand 21 bzw. 23 von deren beiden Umfangsenden her bis zur Kreuzungsstelle 25 hin und die an den Steg 31 bzw. 33 angrenzende Trennwand 23 bzw. 21 nur von dem vom Steg 31 bzw. 33 entfernten Umfangsende her bis zur Kreuzungsstelle 25 hin durchsetzt, wobei die Kreuzungsstelle 25 selbst überall ungetrennt bleibt.

Stellt die Längsausdehnung kein Problem dar oder ist sie gar gewünscht, sieht man pro Umfangsschlitz 27, 29 nur einen Steg 31 bzw. 33 und läßt entweder die Trennwände 21, 23 ganz weg oder setzt jeden Umfangsschlitz 27, 29 derart durch beide Trennwände 21, 23 hindurch fort, daß nichts außer dem einen Steg 31 bzw. 33 übrig bleibt. In diesen beiden Fällen wird ein girlandenhaftes Auseinanderziehen des Leitungsaufnahmekanals 11 möglich.

Die Breite der Stege 31, 33 in Richtung der Umlaufschlitze 27, 29 bestimmt sich hauptsächlich durch die gewünschte Verbiegbarkeit des Leitungsaufnahmekanals 11 und hängt somit einerseits von der Elastizität des für den Leitungsaufnahmekanal 11 gewählten Materials und andererseits von dessen Wandstärke ab.

Bei einer besonders bevorzugten Ausführungsform, bei der es sowohl auf gute Aufeinandergleitfähigkeit des Leitungsaufnahmekanals 11 als auch auf die Möglichkeit des Einbringens eines Memory-Effektes ankommt, verwendet man beispielsweise Poylamid. Verwendet man für den Leitungsaufnahmekanal 11 Material mit Memory-Effekt, so ist es nicht erforderlich, den gesamten Leitungsaufnahmekanal 11 aus solchem Material herzustellen. Es besteht auch die Möglichkeit, in Material ohne Memory-Effekt Füllmaterial mit Memory-Effekt einzubetten.

Durch die Trennwände 21 und 23 werden im Inneren des Leitungsaufnahmekanals 11 vier Innenkammern 35 gebildet, in die je eine oder mehrere ein- oder mehradrige Leitungen eingelegt werden können. Diese Aufteilung hat den Vorteil, daß sich die einzelnen Leitungen bei einer Biegebewegung des Leitungsaufnahmekanals 11 nicht soweit in Radialrichtung hin- und herbewegen.

Wenn starke Biegebewegungen des Leitungsaufnahmekanals 11 ermöglicht und erforderlich sind, kann es von Vorteil sein, die in den Leitungsaufnahmekanal 11 eingelegten Leitungen mit memory-fähigem Material aufzubauen und sie mittels Memory-Behandlung in eine Wendelform vorzuformen, wie dies von Telefonhörerleitungen bekannt ist. Die Leitungen können dann Dehnungen, die durch starke Biegung des Leitungsaufnahmekanals bedingt sind, problemlos mitmachen und nach Rückkehr des Leitungsaufnahmekanals 11 aus dieser starken Biegung wieder rückgängig machen.

Fig. 2 zeigt eine Ausführungsform, die mit der Ausführungsform nach Fig. 1 übereinstimmt, mit Ausnahme von T-förmigen Schlitzverbreiterungen der Umfangsschlitze 27 und 29. Die Schlitzverbreiterungen können auch eine andere Form haben, beispielsweise kreisförmig oder ellipsenförmig sein. Die Schlitzverbreiterungen 37 verhindern einerseits das Risiko des Einreißens der Schlitzenden der Umfangsschlitze 27 und 29. Die Schlitzverbreiterungen 37 haben andererseits eine Vergrößerung der Steglängen der Stege 31 und 33 in Richtung quer zur Verlaufsrichtung der Umfangsschlitze 27 und 29 zur Folge, was die elastische Verbiegbarkeit der Stege 31 und 33 erhöht.

Die Fig. 3 bis 6 zeigen Schleppkettenersatz-Ausführungsformen, die bereits in den genannten Patentanmeldungen EP -A-0490022 und EP -A-0544027 gezeigt sind. Eine ausführliche Beschreibung in der vorliegenden Anmeldung ist daher nicht erforderlich. Hierfür wird auf die genannten EP-Patentanmeldungen verwiesen. Die Fig. 3 bis 6 zeigen je eine Ausführungsform eines Schleppkettenersatzes, der nur in einer Richtung biegefähig ist. Im Fall der Fig. 3 und 4 ist der Schleppkettenersatz durch einen Leitungsaufnahmekanal 39 mit von dessen (in den Fig. 3 und 4 gesehen) Oberseite her eingebrachten Querschlitzen 41 gebildet. Bei der in Fig. 4 gezeigten Ausführungsform ist die obere Wand außerdem mit einem sich in Kanallängsrichtung erstreckenden Längsspalt versehen, durch den hindurch Leitungen 45 in den Innenraum dieses Leitungsaufnahmekanals eindrückbar sind.

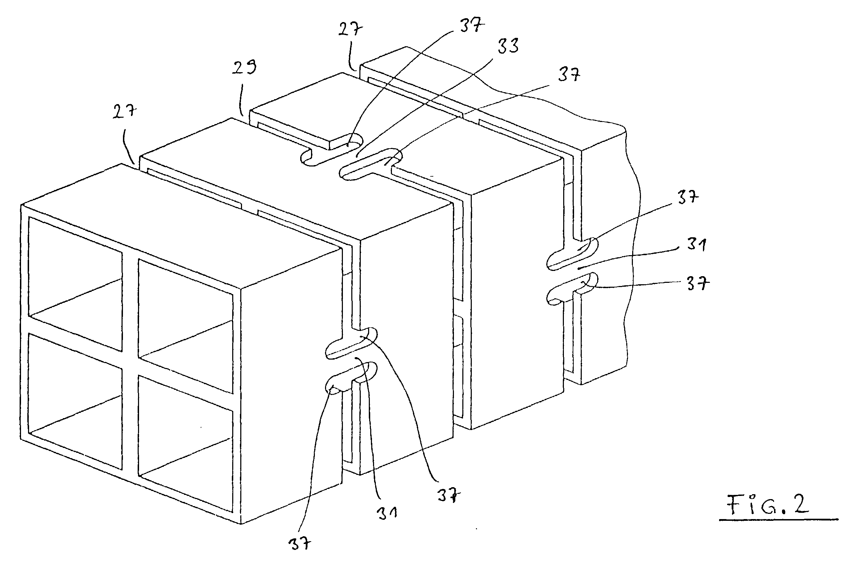

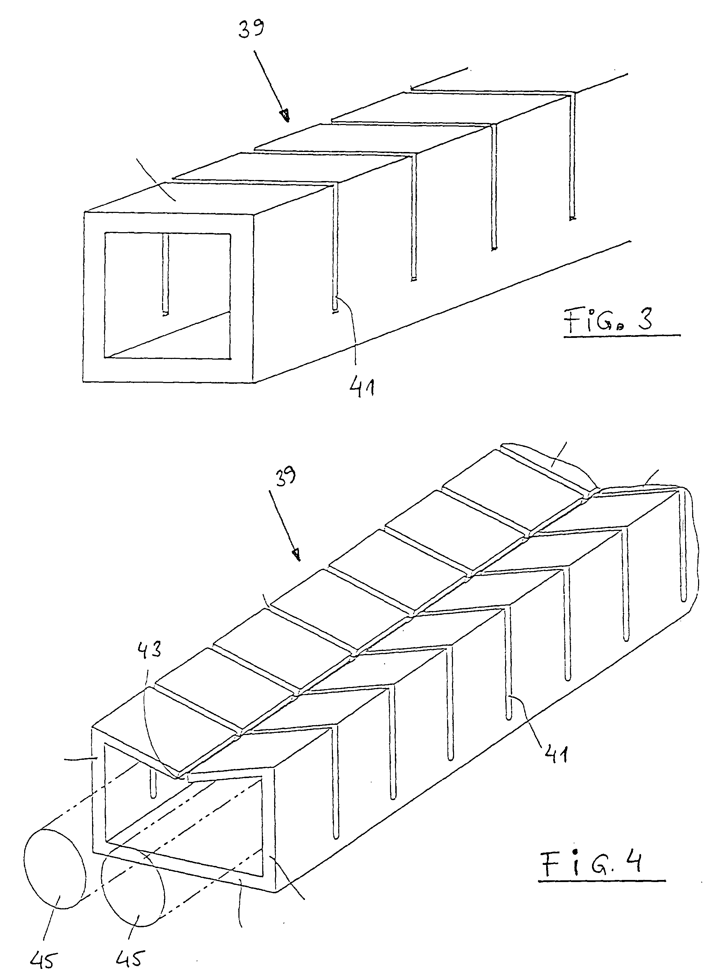

Fig. 5 zeigt eine Bandleitung 47, die schleifenartig zu einem Obertrum und einem Untertrum gebogen ist, deren zueinander weisende Seiten an ihren Seitenrändern mit je einem Gleitband 49 aus Material guter Aneinandergleitfähigkeit versehen sind.

Fig. 6 zeigt eine Ausführungsform eines Schleppkettenersatzes mit zwei Bandkabel 47, deren Seitenränder je in eine Gleitrinne 51 aus Material mit guter Aneinandergleitfähigkeit eingebracht sind. Die Gleitrinnen 51 sind mit Querschlitzen 41 versehen, durch welche sie in der in Fig. 6 dargestellten Weise zusammen mit den Bandkabeln 47 verbiegbar sind. Mittels sich quer erstreckender Haltespangen 53 sind die zwei Bandkabeln 47 und die je zugehörigen Gleitrinnen 51 zu einer Schleppkettenersatz-Leitungseinheit zusammengefaßt.

Gemäß dem Erfindungsaspekt sind in den Fig. 3 und 4 die Leitungsaufnahmekanäle 39, in Fig. 5 die Gleitbänder 49 und in Fig. 6 die Gleitrinnen 51 mit Memory-Material aufgebaut, mittels welchem sie je eine Vorzugsform speichern, die einer Vorzugsstellung, insbesondere neutralen Stellung oder Ruhestellung, einer zugehörigen beweglichen Einrichtung angepaßt ist.

Bei den in den Fig. 5 und 6 gezeigten Ausführungsformen kann der Memory-Effekt auch dadurch erzeugt oder mit erzeugt werden, daß die Bandleitung bzw. Bandleitungen 47 mit einem Memory-Effekt aufweisenden Material aufgebaut werden.

## Patentansprüche

1. Schleppkettenersatz für eine Leitungsanordnung,
a) deren Enden mit einer feststehenden Einrichtung bzw. mit einer beweglichen Einrichtung verbunden sind und die zwischen deren Enden flexibel ist, wobei
b) der Schleppkettenersatz eine Leitungseinfaßeinrichtung (11; 39; 49; 51) zum Einfassen mindestens einer ein- oder mehradrigen Leitung (45; 47) aufweist, **dadurch gekennzeichnet,**
c) daß die Leitungseinfaßeinrichtung (11; 39; 49; 51) aus einem Material mit Memory-Effekt besteht oder versehen ist.

2. Schleppkettenersatz nach Anspruch 1, dadurch gekennzeichnet, daß die Leitungseinfaßeinrichtung (11; 39; 49; 51) aus Material guter Aneinandergleitfähigkeit besteht oder auf wenigstens einer Außenwand mit derartigem Material versehen ist.

3. Schleppkettenersatz nach Anspruch 1 oder 2, dadurch gekennzeichnet, daß die Leitungseinfaßeinrichtung durch einen Leitungsaufnahmekanal (11; 39) gebildet ist, der mindestens einen Kanalinnenraum (35) zur losen Aufnahme der mindestens einen Leitung (45) besitzt.

4. Schleppkettenersatz nach einem der Ansprüche 1 bis 3, dadurch gekennzeichnet, daß die Flexibilität der Leitungseinfaßeinrichtung (11; 39; 51) durch in Leitungslängsrichtung im Abstand voneinander angeordnete Querschlitze (27, 29; 41) gegeben ist, die sich je über einen Teil der Leitungseinfaßeinrichtung (11; 39; 51) erstrecken.

## Claims

1. Dragchain replacement for a line assembly the ends of which are connected to a stationary means and to a movable means respectively and which is flexible between its ends, the dragchain replacement comprising a line encasement assembly (11; 39; 49; 51) for the encasement of at least one single-core line or a multi-core line (45; 47), characterized in that the line encasement assembly (11; 39; 49; 51) is constituted by a material with memory effect or is provided with it.

2. Dragchain replacement according to claim 1, characterized in that the line encasement assembly (11; 39; 49; 51) is constituted by material having good sliding properties to one another or is provided with such a material on at least one outer wall.

3. Dragchain replacement according to claim 1 or 2, characterized in that the line encasement assembly is constituted by a line receiving channel (11; 39) which has at least one channel interior space (35) for the loose receiving of the at least one line (45).

4. Dragchain replacement according to any one of claims 1 to 3, characterized in that the flexibility of the line encasement assembly (11; 39; 51) is given by transversal slits (27, 29; 41) disposed spaced apart in longitudinal direction of the line and which extend respectively along one part of the line encasement assembly (11; 39; 51).

## Revendications

1. Organe de remplacement de chaîne traînante pour une disposition de lignes, dont les extrémités sont liées à un dispositif fixe, respectivement à un dispositif mobile, et qui est flexible entre ses extrémités, l'organe de remplacement de chaîne traînante présentant un dispositif de clôture de lignes (11 ; 39 ; 49 ; 51) pour enclore au moins une ligne monoconductrice ou multiconductrice (45 ; 47), caractérisé en ce que le dispositif de clôture de lignes (11 ; 39 ; 49 ; 51) est composé d'un matériau à effet à mémoire ou en est pourvu.

2. Organe de remplacement de chaîne traînante selon la revendication 1, caractérisé en ce que le dispositif de clôture de lignes (11 ; 39 ; 49 ; 51) est composé de matériau ayant une bonne propriété de glisser l'un contre l'autre ou est pourvu d'un tel matériau sur au moins une paroi extérieure.

3. Organe de remplacement de chaîne traînante selon la revendication 1 ou 2, caractérisé en ce que le dispositif de clôture de lignes est formé par un canal de réception de lignes (11 ; 39) qui possède au moins une chambre intérieure de canal (35) pour la réception lâche de la au moins une ligne (45).

4. Organe de remplacement de chaîne traînante selon l'une des revendications 1 à 3, caractérisé en ce que la flexibilité du dispositif de clôture de lignes (11 ; 39 ; 51) est donnée par des fentes transversales (27, 29 ; 41) agencées à distance l'une de l'autre qui s'étendent chacune sur une partie du dispositif de clôture de lignes (11 ; 39 ; 51).
